# EUROPEAN PATENT APPLICATION

(11) **EP 1 826 717 A1**
(43) Date of publication of application: **29.08.2007**
(21) Application number: 06114723.7
(22) Date of filing: 30.05.2006
(51) Int. Cl.: G06Q 30/00

(54) **Information terminal apparatus, method of controlling the same, computer product, and information output system**

(30) Priority: 28.02.2006 JP 2006053356
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Toyokawa, Takashi, Inagi-shi Kanagawa 206-8555 (JP); Kaneda, Miyako, Kawasaki-shi Kanagawa 211-8588 (JP)
(74) Representative: Kreutzer, Ulrich

(57) **Abstract**

A positional-information detecting unit detects positional information indicating a position in a store. A customer-attribute-information storing unit stores a behavioral attribute of the user. A product-related-information storing unit stores the product-related information in association with the positional information and the behavioral attribute. An information-output control unit acquires the product-related information for the user from the stored product-related information, based on the detected positional information and the stored behavioral attribute, and outputs the acquired product-related information.

## Description

### BACKGROUND OF THE INVENTION

### 1. Field of the Invention

The present invention relates to an information terminal apparatus that moves around a store with a user and outputs product-related information, a method of controlling the information terminal apparatus, an information terminal program, and an information output system, and more particularly, to an information terminal apparatus that is capable of outputting information based on behavioral attributes of the user in response to the output product-related information, a method of controlling the information terminal, an information terminal program, and an information output system.

### 2. Description of the Related Art

In conventional technologies, there is a technology of outputting, with an output device such as a display arranged on a shopping cart used in a supermarket or the like, product information and the like in accordance with locations in the store. For instance, Japanese Patent Application Laid-open No. 2001-34850 discloses a technology of outputting advertisement and product information on a display unit arranged on a shopping cart in association with class, gender, and age of a user or in association with previous purchase data of the user.

With the above technology, however, although information could be output in association with personal attributes such as users' classes, genders, and ages or in association with previous purchase data of the users, there has been a problem that information cannot be output in association with users' behavioral attributes that indicate whether, in response to the output information, a product related to the information has actually been purchased.

### SUMMARY OF THE INVENTION

It is an object of the present invention to at least solve the problems in the conventional technology.

An information terminal apparatus that moves around a store with a user, according to one aspect of the present invention, includes a positional-information detecting unit that detects positional information indicating a position in the store; a customer-attribute-information storing unit that stores a behavioral attribute of the user obtained by collating product-related information previously output for the user and purchase information indicating a product previously purchased by the user; a product-related-information storing unit that stores the product-related information in association with the positional information and the behavioral attribute; and an information-output control unit that acquires the product-related information for the user from the stored product-related information, based on the detected positional information and the stored behavioral attribute, and outputs the acquired product-related information.

A method of controlling an information terminal apparatus that moves around a store with a user, according to another aspect of the present invention, includes detecting positional information indicating a position in the store; storing a behavioral attribute of the user obtained by collating product-related information previously output for the user and purchase information indicating a product previously purchased by the user; storing stores the product-related information in association with the positional information and the behavioral attribute; and information-output controlling including acquiring the product-related information for the user from the stored product-related information, based on the detected positional information and the stored behavioral attribute, and outputting the acquired product-related information.

A computer-readable recording medium according to still another aspect of the present invention stores a computer program for controlling an information terminal apparatus that moves around a store with a user. The computer program causes a computer to execute detecting positional information indicating a position in the store; storing a behavioral attribute of the user obtained by collating product-related information previously output for the user and purchase information indicating a product previously purchased by the user; storing stores the product-related information in association with the positional information and the behavioral attribute; and information-output controlling including acquiring the product-related information for the user from the stored product-related information, based on the detected positional information and the stored behavioral attribute, and outputting the acquired product-related information.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a diagram for explaining the concept of a shopping cart system according to the present embodiment;
Fig. 2 is a functional block diagram for explaining the structure of a cart terminal according to the present embodiment;
Fig. 3 is a diagram for explaining an example of an information output area of a display;
Fig. 4 is a diagram for explaining an example of a determination-reference-information storing unit;
Fig. 5 is a diagram for explaining an example of a contents-information storing unit;
Fig. 6 is a diagram for explaining an example of a point-information storing unit;
Fig. 7 is a diagram for explaining an example of a price-information storing unit;
Fig. 8 is a diagram for explaining an example of a coupon-information storing unit;
Fig. 9 is a function block diagram for explaining the structure of a store server according to the present embodiment;
Fig. 10 is a diagram for explaining an example of a customer-information storing unit;
Fig. 11 is a diagram for explaining an example of a product-information storing unit;
Fig. 12 is a functional block diagram for explaining the structure of a POS server according to the present embodiment;
Fig. 13 is a functional block diagram for explaining the structure of an information analysis server according to the present embodiment;
Fig. 14 is a flowchart for explaining the processing procedure of the cart terminal according to the present embodiment; and
Fig. 15 is a functional block diagram for explaining the structure of a computer that executes a cart terminal program according to the present embodiment.

### DETAILED DESCRIPTION OF THE PREFERRED EMBODIMENTS

Exemplary embodiments of the present invention will be explained below in detail with reference to the accompanying drawings.

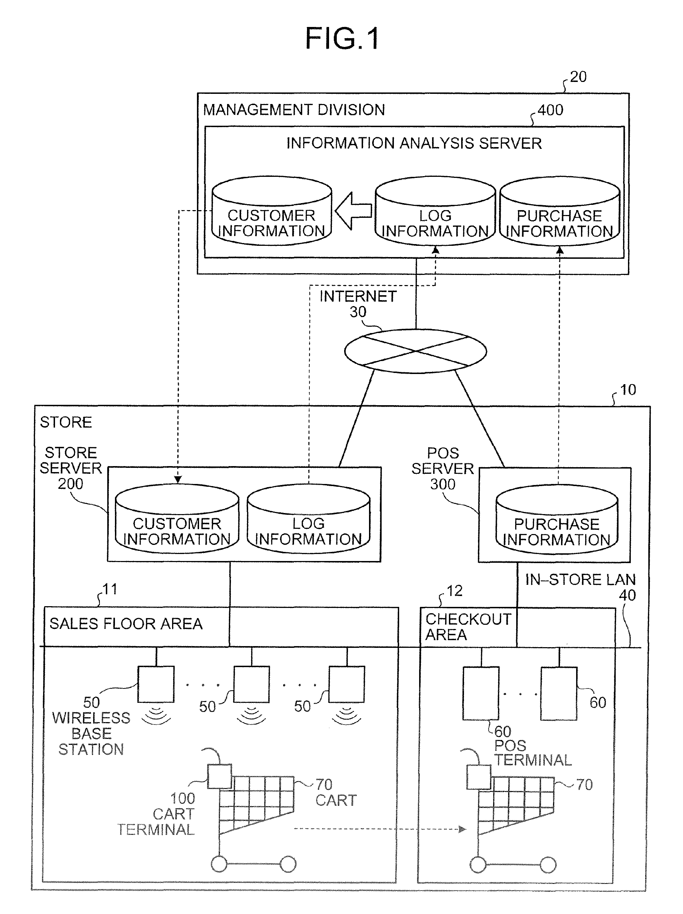

Fig. 1 is a schematic diagram for explaining the concept of a shopping cart system according to an embodiment of the present invention. The shopping cart system according to the present embodiment is constituted with a cart terminal 100 installed on a cart 70 that moves around a store 10 with a user, a store server 200 and a POS server 300 installed in the store 10, and an information analysis server 400 installed in a management division 20 that manages the store 10 as well as other stores.

The cart terminal 100 and the store server 200 here are connected to each other in a sales floor area 11 so as to enable communications therebetween via multiple wireless base stations 50 that are connected to an in-store LAN 40. The store server 200, the POS server 300, and the information analysis server 400 are connected to one another via an internet 30. Further, multiple POS terminals 60 are installed in a checkout area 12, and each of the POS terminals 60 and the POS server 300 are connected to each other via the in-store LAN 40.

The cart terminal 100 includes an infrared (IR) receiver, and outputs different types of information on the display according to locations (sales floor) by acquiring the positional information transmitted by IR transmitters installed all over around the store 10. For example, the cart terminal 100 outputs special sale information on vegetables when the user (cart) is in the vegetable section, and outputs information on coupons that can be used when purchasing meat, on the display, when the user is in the meat section.

When using the cart 70, the user of the cart 70 places a membership card that stores a member ID onto the card reader of the cart 70 for reading. Then, when the above different types of information is output on the display, the cart terminal 100 sends log information that indicates the output information, along with the member ID, to the store server 200.

Upon receiving the log information, the store server 200 stores it, and sends the log information that has been stored entirely to the information analysis server 400 of the management division 20 at once, for example at a predetermined timing after the store closing time. Then, the information analysis server 400 stores the received log information in association with member IDs.

The user who has finished shopping proceeds to the checkout area 12, where the items in the cart 70 are checked out. When checking out, the user shows his/her membership card to the clerk so that the membership card is read by the POS terminal 60. Then, after checking out, the POS terminal 60 sends purchase information that indicates the items purchased by the user, along with his/her member ID, to the POS server 300.

Upon receiving the purchase information, the POS server 300 stores it, and sends the purchase information that has been stored entirely to the information analysis server 400 of the management division 20 at once, for example at a predetermined timing after the store closing time. Then, the information analysis server 400 stores the received purchase information in association with member IDs.

A person in charge of the management division compares the log information and the purchase information stored in the information analysis server 400 for each member ID, and extracts purchase patterns and behavioral patterns for each user. For instance, a pattern showing that a cabbage is often purchased and a pattern showing that a related item is purchased after seeing special sale information are extracted. Then, the information analysis server 400 stores the extracted purchase pattern and behavioral pattern, as well as customer information including the user's individual attributes (such as age group and gender) for each member ID.

Such customer information is sent entirely to the store server 200 at once, for example at the store opening time. Then, at the timing of the user causing the cart terminal 100 to read his/her membership card, the customer information of the member ID provided on the membership card is sent from the store server 200 to the cart terminal 100.

Then, the information cart terminal 100 outputs different types of information on the display, based on the above customer information in addition to the position, according to the individual attributes, the purchase patterns, and the behavioral patterns of the user. For instance, special sale price information targeted for gold members is output for a gold member, while for a user who likes cabbages, cabbage recipe information is output. For a customer who tends to buy products during a double point campaign, information on double point campaign dates and the like is output.

As described above, in the shopping cart system according to the present embodiment, the POS server 300 stores, in accordance with users, purchase information that indicates items purchased by the users in the past; the information analysis server 400 compares the product-related information output by the cart terminal 100 for a user in the past with the purchase information stored in the POS server 300 to extract behavioral attributes that indicate the user's purchase behaviors in response to the product-related information; the cart terminal 100 detects the positional information that indicates the position in the store 10, stores the product-related information in association with the positional information and the detected behavioral attributes, obtains and outputs the product-related information from the stored product-related information based on the detected positional information and the behavioral attributes extracted by the information analysis server 400. The shopping cart system therefore can output information, based on the behavioral attributes that indicate users' purchase behaviors in response to the output product-related information. As a result, product-related information that is likely to arouse users' purchase behaviors can be provided in a timely manner.

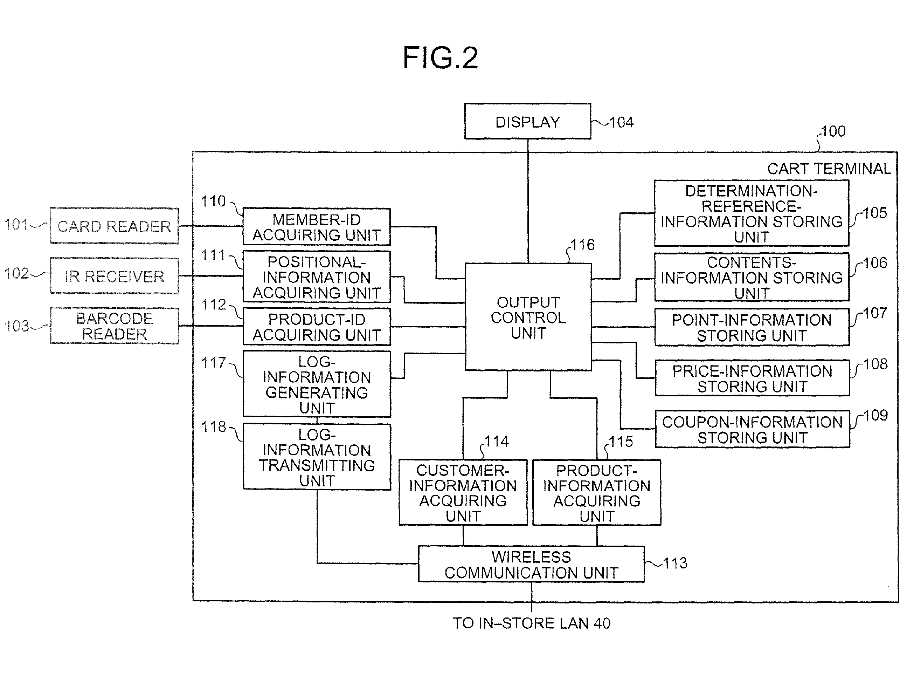

Fig. 2 is a functional block diagram for explaining the structure of the cart terminal 100 according to the present embodiment. As shown in the drawing, the cart terminal 100 includes a card reader 101 that reads a member ID from a membership card, an IR receiver 102 that detects positional information transmitted from IR transmitters installed all over in the store, a barcode reader 103 that reads a product ID from a barcode attached onto a product, and a display 104 that outputs different types of product information.

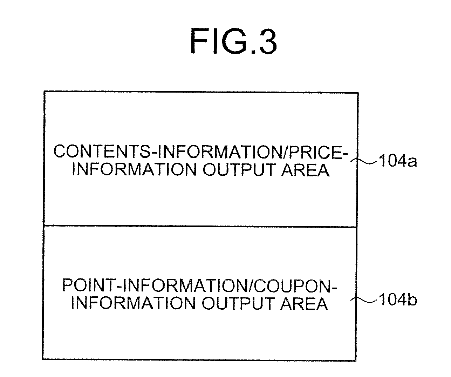

Fig. 3 is a diagram of an example of an information output area of the display 104. For instance, as shown in the drawing, the information output area of the display 104 is divided into two information output areas to output different types of information. A contents-information/price-information output area 104a shown in the drawing is a region for outputting contents information such as special sale information of products and price information for each product, while a point-information/coupon-information output area 104b is a region for outputting point information such as information related to a double point campaign and coupon information for each product.

Moreover, the cart terminal 100 includes, as storing units for storing different types of information, a determination-reference-information storing unit 105, a contents-information storing unit 106, a point-information storing unit 107, a price-information storing unit 108, and a coupon-information storing unit 109. The cart terminal 100 further includes, as processing units for carrying out different processes, a member-ID acquiring unit 110, a positional-information acquiring unit 111, a product-ID acquiring unit 112, a wireless communication unit 113, a customer-information acquiring unit 114, a product-information acquiring unit 115, an output control unit 116, a log-information generating unit 117, and a log-information transmitting unit 118.

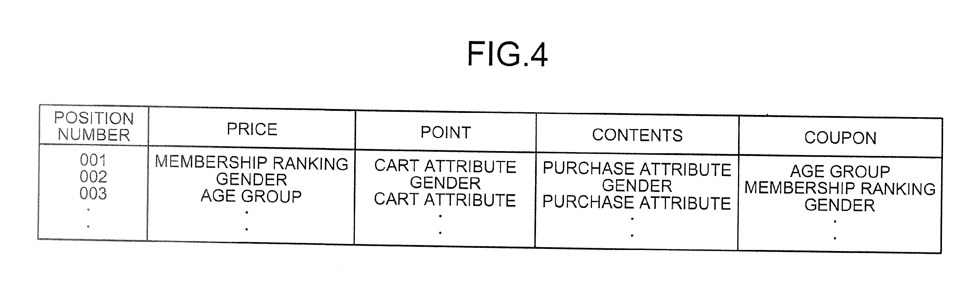

The determination-reference-information storing unit 105 is a storing unit that stores determination references for determining the contents of different types of information output by the cart terminal 100 in accordance with the position of the store 10. Fig. 4 is a diagram of an example of the determination-reference-information storing unit 105. As shown in the drawing, the determination-reference-information storing unit 105 stores price information determination references, point information determination references, contents information determination references, and coupon information determination references, in association with the position numbers individually given to positions around the store 10. A position number here is included in the positional information transmitted by the IR transmitters installed at different places in the store.

For instance, in the example described in the drawing, the content of the price information output on the display at the position to which a position number "001" is assigned is determined by using "membership ranking" as a determination reference, while the content of the point information display at the same position is determined by using "cart attribute" as a determination reference. The content of the contents information is determined by using "purchase attribute" as the determination reference, and the content of the coupon information is determined by using "age group" as a determination reference. The determination references discussed here, including "membership ranking", "cart attribute", "purchase attribute", and "age group", are stored in advance in the determination-reference-information storing unit 105 by a person in charge of management of the store.

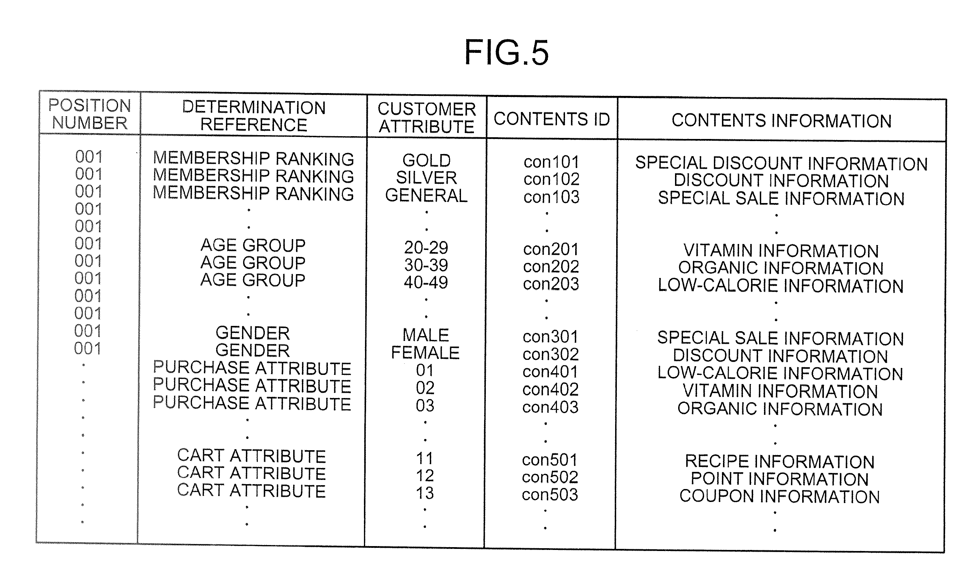

The contents-information storing unit 106 is a storing unit that stores the contents information output by the cart terminal 100 in accordance With positions in the store 10, the determination references, and the customer attributes. Fig. 5 is a diagram of an example of the contents-information storing unit 106. As shown in the drawing, the contents-information storing unit 106 stores contents information and contents IDs that uniquely identify the contents information in association with the position numbers, the determination references, and the customer attributes. The contents information here means the information that contributes to the users' purchase, such as advertisements on "special sale information" for specific members, "low calorie information" for members in their thirties, and "recipe information" for female members. Further, the customer attributes mentioned here will be explained in detail in the description of a customer-information storing unit 210 and a customer-information-analysis processing unit 470 of the store server 200 discussed later.

For instance, in the example described in the drawing, the determination reference is "membership ranking" at the position to which "001" is assigned as its position number. If the customer attribute is "gold", "special sale information" is output as the contents information. This contents information is created, for example, by the information analysis server 400 of the management division 20, delivered to the store server 200 when the store opens, and delivered to the cart terminal 100 when the cart terminal 100 is started up.

With the contents-information storing unit 106 storing information such as advertisement information that may contributes to the users' purchase, in association with the positional information, the determination reference, and the customer attributes, timely information such as advertisement information that may contribute to the users' purchase can be output for users who tend to react to the information such as advertisement information for individual users that may contribute to the users' purchase and buy related products.

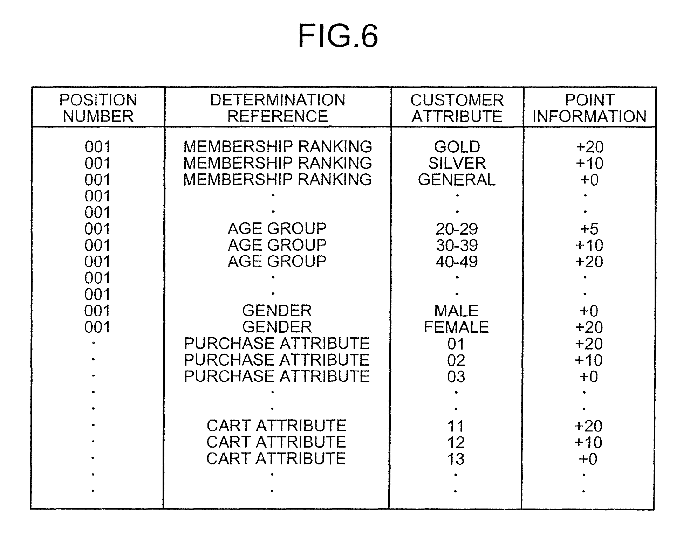

The point-information storing unit 107 is a storing unit that stores point information output by the cart terminal 100 in accordance with positions in the store 10, the determination references, and the customer attributes. Fig. 6 is a diagram of an example of the point-information storing unit 107. As shown in the drawing, the point-information storing unit 107 stores point information that indicates points to be increased, in association with the position numbers, the determination references, and the customer attributes.

For instance, in the example described in the drawing, the determination reference is "membership ranking" at the position to which "001" is assigned as its position number. If the customer attribute is "gold", "+20 (points)" is output as the point information. The point information here is stored in advance in the point-information storing unit 107 by a person in charge of management of the store.

With the contents-information storing unit 106 storing the point information in association with the positional information, the determination references, and the customer attributes, timely point information can be output for users who tend to respond to the point information for individual users and buy related products.

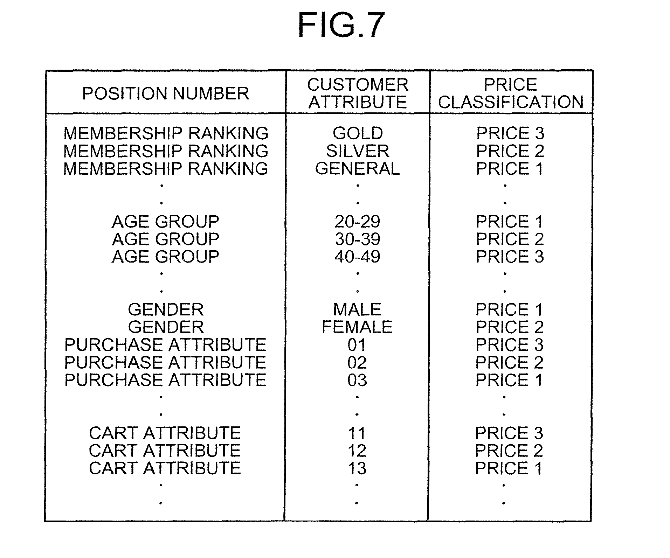

The price-information storing unit 108 is a storing unit that stores point information output for each product by the cart terminal 100 in accordance with the determination references and the customer attributes. Fig. 7 is a diagram of an example of the price-information storing unit 108. As shown in the drawing, the price-information storing unit 108 stores price classifications in association with the determination references and the customer attributes. The price classifications here include classifications such as "price 1", "price 2", and "price 3" that show the levels of prices. The prices that correspond to these levels (specific prices) are stored in a product-information storing unit 220 of the store server 200, which will be described later, in accordance with product IDs.

For instance, in the example described in the drawing, when the determination reference is "membership ranking" and the customer attribute is "gold", the price classification is determined as "price 3". The price information described here is stored in advance in the price-information storing unit 108 by a person in charge of management of the store.

With the price-information storing unit 108 storing the price information in association with the positional information, the determination references, and the customer attributes, timely price information can be output for users who tend to react to the price information for individual users and buy related products.

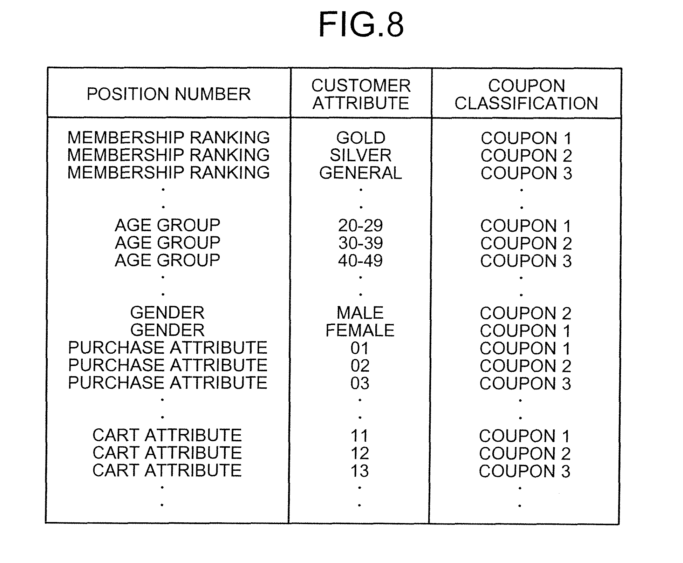

The coupon-information storing unit 109 is a storing unit that stores coupon information output for each product by the cart terminal 100 in accordance with the determination references and the customer attributes. Fig. 8 is a diagram of an example of the coupon-information storing unit 109. As shown in the drawing, the coupon-information storing unit 109 stores coupon classifications in association with the determination references and the customer attributes. The coupon classifications here include classifications such as "coupon 1", "coupon 2", and "coupon 3" that indicate types of coupons. The types of coupons that correspond thereto are stored in the product-information storing unit 220 of the store server 200, which will be described later, by product IDs.

For instance, in the example described in the drawing, when the determination reference is "membership ranking" and the customer attribute is "gold", the coupon classification is determined as "coupon 1". The coupon information described here is stored in advance in the coupon-information storing unit 109 by a person in charge of management of the store.

The member-ID acquiring unit 110 is a processing unit that acquires a member ID read from a membership card by the card reader 101. The positional-information acquiring unit 111 is a processing unit that controls the IR receiver and regularly receives positional information transmitted by IR transmitters installed around the store 10. The product-ID acquiring unit 112 is a processing unit that acquires a product ID read from a barcode attached to a product by the barcode reader 103.

With the contents-information storing unit 106 storing coupon information in association with the positional information, the determination references, and the customer attributes, timely coupon information can be output for users who tend to react to the coupon information provided for individual users and buy related products.

The wireless communication unit 113 is a processing unit that controls wireless communications with the store server 200 via the wireless base stations 50 connected to the in-store LAN. The customer-information acquiring unit 114 is a processing unit that designates the member ID acquired by the member-ID acquiring unit 110 and acquires customer information from the customer-information storing unit 210 of the store server 200, which will be described later. The product-information acquiring unit 115 is a processing unit that designates the product ID of a product acquired by the product-ID acquiring unit 112 and acquires product information from the product-information storing unit 220 of the store server 200, which will be described later.

The output control unit 116 is a processing unit that controls information output to the display 104, based on the positional information and customer information. Specifically, when the user places his/her membership card into the card reader 101 for reading, the output control unit 116 controls the customer-information acquiring unit 114, designates the member ID acquired by the member-ID acquiring unit 110, and acquires customer information that includes the customer attribute of the user.

Then, when the positional-information acquiring unit 111 receives the positional information, the output control unit 116 refers to the determination-reference-information storing unit 105 based on the positional information to acquire the determination reference that is used to determine the content of different types of information to be output on the display 104. Thereafter, the output control unit 116 refers to the contents-information storing unit 106 to acquire the contents information based on the positional information, the determination reference, and the customer attribute (included in the customer information) that serves as the determination reference. The acquired contents information is output in the contents-information/price-information output area 104a on the display 104. Furthermore, the output control unit 116 refers to the point-information storing unit 107 to acquire the point information based on the positional information, the determination reference, and the customer attribute that serves as the determination reference. The acquired point information is output in the point-information/coupon-information output area 104b of the display 104.

The output control unit 116 may be configured to display a button for storing the points on the display 104 so that, when the user presses the button, the output point information is sent to the store server 200 along with the member ID to store in the customer-information storing unit 210, which will be described later. In such a case, the point information stored in the customer-information storing unit 210 is sent to the POS terminal 60 to be used in the checkout processing of the items when the user checks out.

In addition, when the user places a barcode attached to an item on the barcode reader 103 for reading, the output control unit 116 refers to the price-information storing unit 108 to acquire a price classification based on the determination reference and the customer attribute which serves as the determination reference. Then, the output control unit 116 controls the product-information acquiring unit 115 and designates the product ID acquired by the product-ID acquiring unit 112 to acquire the product information of the item from the store server 200. The product information corresponding to the price classification that has already been acquired is extracted and output in the contents-information/price-information output area 104a of the display 104. Further, the output control unit 116 refers to the coupon-information storing unit 109 to acquire a coupon classification based on the determination reference and the customer attribute that serves as the determination reference. Then, the output control unit 116 extracts the coupon information that corresponds to the coupon classification, from the product information that has already been acquired, and outputs it on the point-information/coupon-information output area 104b of the display 104.

The output control unit 116 may be configured to display a button for storing the coupon on the display 104 so that, when the user presses the button, the output coupon information is sent to the store server 200 along with the member ID to store in the customer-information storing unit 210, which will be described later. In such a case, the coupon information stored in the customer-information storing unit 210 is sent to the POS terminal 60 to be used in the checkout processing of the items when the user checks out.

Moreover, when outputting the above different types of information on the display 104, the output control unit 116 controls the log-information generating unit 117 at the same time to generate log information including the member ID of the user of the cart terminal 100, the contents ID that identifies the contents information output on the display by the output control unit 116 or the point information or the product ID and the price classification or the product ID and the coupon classification, and the information outputting time, and output the log information to the log-information transmitting unit 118. The log information output to the log-information transmitting unit 118 is transmitted to the store server 200 as needed.

The output control unit 116 terminates the output processing on the above different types of information once the positional-information acquiring unit 111 acquires the positional information transmitted by the IR transmitter installed near a cashier.

The log-information generating unit 117 is a processing unit that prepares log information to be sent to the store server 200. The log-information generating unit 117 prepares log information that includes the contents ID that identifies the contents information output on the display by the output control unit 116, the point information, the product ID and the price classification, or the product ID and the coupon classification, as well as the member ID of the user who is using the cart terminal 100 and the information outputting time, and output it to the log-information transmitting unit 118 as needed.

The log-information transmitting unit 118 is a processing unit that transmits the log information to the store server 200. The log-information transmitting unit 118 transmits the log information received from the log-information generating unit 117, via the wireless communication unit 113 to the store server 200 as needed.

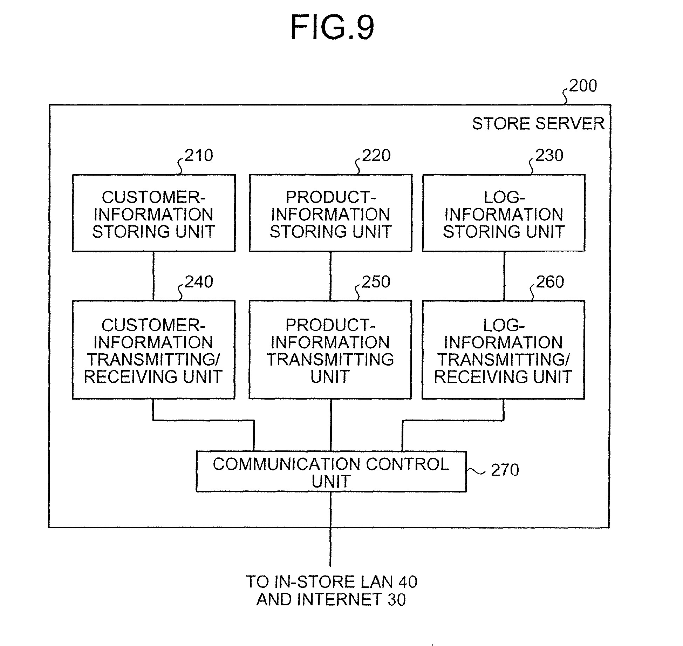

Fig. 9 is a function block diagram of a structure of the store server 200 according to the present embodiment. As shown in this drawing, the store server 200 includes, as storing units that store different types of information, the customer-information storing unit 210, the product-information storing unit 220, and a log-information storing unit 230. The store server 200 also includes, as processing units that perform different types of processes, a customer-information transmitting/receiving unit 240, a product-information transmitting unit 250, a log-information transmitting/receiving unit 260, and a communication control unit 270.

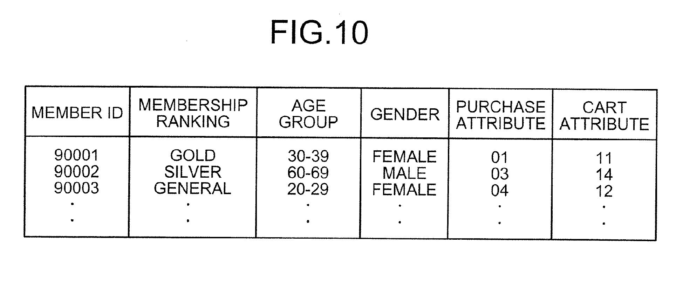

The customer-information storing unit 210 is a storing unit that stores customer attribute information for individual users who use the store 10. Fig. 10 is a diagram of an example of the customer-information storing unit 210. As shown in the drawing, the customer-information storing unit 210 stores membership rankings, age groups, genders, purchase attributes, and cart attributes, in association with member IDs.

The member ID means a number provided at the time of the membership enrollment, with which the user is uniquely identified. The membership rankings, age groups, and genders are personal attributes that users declare at the time of the membership enrollment. This membership enrollment is performed on the information analysis server 400 of the management division 20, and the membership ID and the personal attributes are stored in a whole-customer-information storing unit 410, which will be described later.

Moreover, the purchase attribute is a value that indicates a user's purchase pattern, while the cart attribute is a value that indicates a user's behavioral pattern. The purchase attribute and the cart attribute will be explained later in detail in the explanation of the customer-information-analysis processing unit 470 of the information analysis server 400.

For instance, in the example of the drawing, "gold" for the membership ranking, "in their thirties" for the age group, "female" for the gender, "01" for the purchase attribute, and "11" for the cart attribute are stored as the customer attributes of a user whose member ID is "90001".

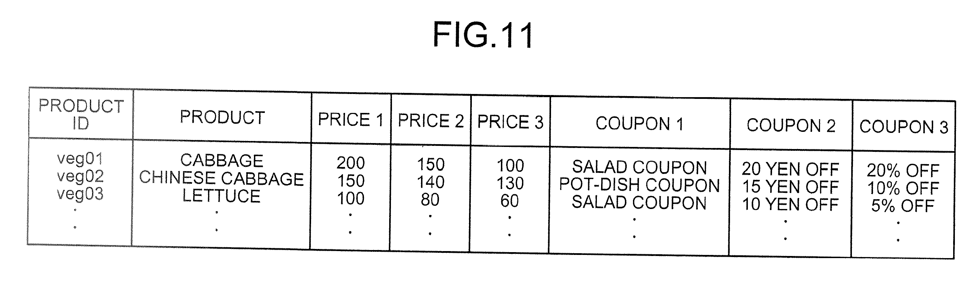

The product-information storing unit 220 is a storing unit that stores price information and coupon information for each product. Fig. 11 is a diagram of an example of the product-information storing unit 220. As shown in this drawing, a product-information storing unit 235 stores brand names, price 1, price 2, price 3, coupon 1, coupon 2, and coupon 3 in association with product IDs.

The price 1, price 2, and price 3 here are prices (costs) determined at different levels. For instance, as shown in Fig. 11, by setting price 1 as "200 yen", price 2 as "150 yen", and price 3 as "100", different levels such as the amount of price 1>the amount of price 2>the amount of price 3 can be set. In addition, coupon 1, coupon 2, and coupon 3 indicate different types of coupons. For instance, by setting coupon 1 as "salad coupon", coupon 2 as "20 yen off", and coupon 3 as "20% off", different types of coupons can be defined.

The log-information storing unit 230 is a storing unit that stores the log information received from the cart terminal 100. The log-information storing unit 230 stores the member ID, the contents ID/point information/product ID and price classification/product ID and coupon classification, and information output time that are received from the cart terminal 100 via the communication control unit 270.

The customer-information transmitting/receiving unit 240 is a processing unit that transmits the customer information stored in the customer-information storing unit 210 to the cart terminal 100 and stores the customer information received from the information analysis server 400 in the customer-information storing unit 210. The customer-information transmitting/receiving unit 240 retrieves customer information of the designated member ID from the customer-information storing unit 210 in response to a request made by the cart terminal 100 and sends it to the cart terminal 100 via the communication control unit 270. Moreover, the customer information received rom the information analysis server 400 via the communication control unit 270 is stored in the customer-information storing unit 210.

The product-information transmitting unit 250 is a processing unit that transmits the product information stored in the product-information storing unit 220 to the cart terminal 100. The product-information transmitting unit 250 retrieves the product information of the designated product ID from the product-information storing unit 220 in response to a request made by the cart terminal 100 and transmits it to the cart terminal 100 via the communication control unit 270.

The log-information transmitting/receiving unit 260 is a processing unit that stores the log information received from the cart terminal 100 in the log-information storing unit 230 and transmits the log information stored in the log-information storing unit 230 to the information analysis server 400. The log-information transmitting/receiving unit 260 stores the log information received from the cart terminal 100 via the communication control unit 270 in the log-information storing unit 230 as needed, and transmits the entire log information stored in the log-information storing unit 230 to the information analysis server 400 via the communication control unit 270 at once, for example at a predetermined timing after the store closing time.

The communication control unit 270 is a processing unit that controls communications with cart terminals 100 via the wireless base stations 50 connected to the in-store LAN 40 and communications with the information analysis server 400 connected thereto via the internet 30.

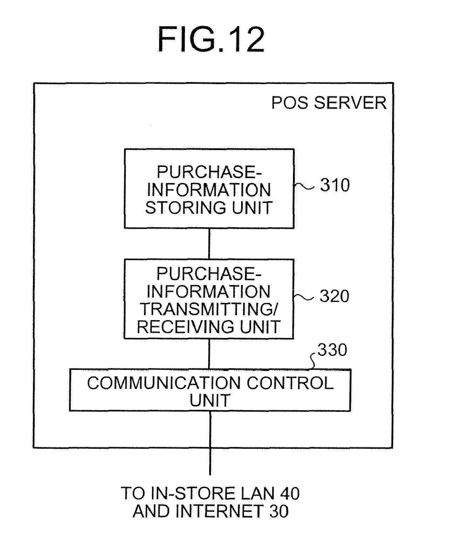

Fig. 12 is a functional block diagram of the structure of the POS server 300 according to the present embodiment. As shown in this drawing, the POS server 300 includes a purchase-information storing unit 310 as a storing unit, and a purchase-information transmitting/receiving unit 320 and a communication control unit 330 as processing units that perform different processes.

The purchase-information storing unit 310 is a storing unit that stores the purchase information received from the POS terminal 60. The purchase-information storing unit 310 stores purchase information including a member ID, a product ID, and the purchase time that is received from the POS terminal 60 via the purchase-information transmitting/receiving unit 320.

The purchase-information transmitting/receiving unit 320 is a processing unit that stores the log information received from the POS terminal 60 in the purchase-information storing unit 310 and transmits the log information stored in the purchase-information storing unit 310 to the information analysis server 400. The purchase-information transmitting/receiving unit 320 stores purchase information including member IDs, product IDs, and purchase times received from the POS terminal 60 via the communication control unit 330 in the purchase-information storing unit 310 as needed, and transmits the entire purchase information stored in the purchase-information storing unit 310 to the information analysis server 400 via the communication control unit 330 at once, for example at a predetermined timing after the store closing time.

The communication control unit 330 is a processing unit that controls communications with the POS terminals 60 connected to the in-store LAN 40 and communications with the information analysis server 400 connected thereto via the internet 30.

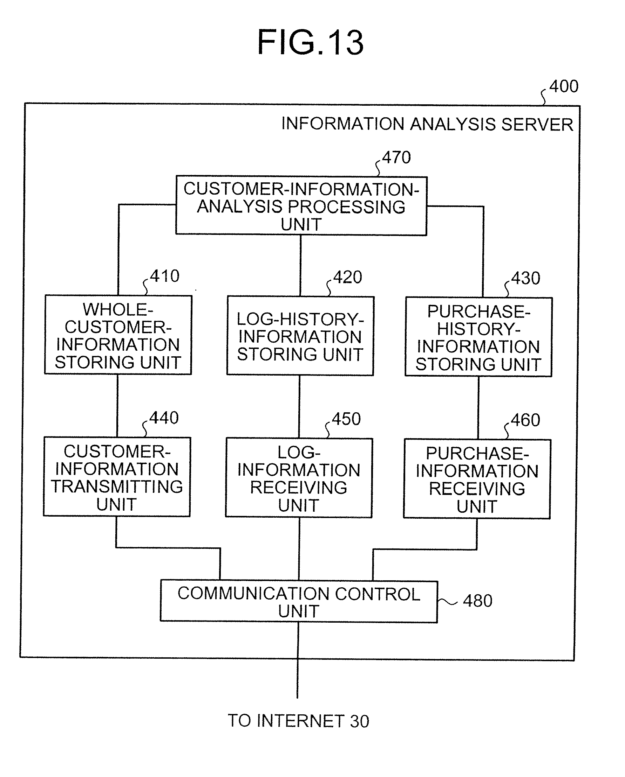

Fig. 13 is a functional block diagram of the structure of the information analysis server 400 according to the present embodiment. As shown in the drawing, the information analysis server 400 includes the whole-customer-information storing unit 410, a log-history-information storing unit 420, and a purchase-history-information storing unit 430 as storing units, and a customer-information transmitting/receiving unit 440, a log-information receiving unit 450, a purchase-information receiving unit 460, the customer-information-analysis processing unit 470, and a communication control unit 480 as processing units that perform different processes.

The whole-customer-information storing unit 410 is a storing unit that stores attribute information for each user who uses the store 10. The whole-customer-information storing unit 410 stores member rankings, age groups, genders, purchase attributes, and cart attributes in association with member IDs, in a similar manner to the customer-information storing unit 210 shown in Fig. 10. The purchase attributes here are values that indicate purchase patterns of users, and the cart attributes are values that indicate behavioral patterns of the users. These purchase attributes and cart attributes will be discussed later in detail in the explanation of the whole-customer-information storing unit 410 of the information analysis server 400.

The log-history-information storing unit 420 is a storing unit that stores the log information received from the store server 200 as log history information. The log-history-information storing unit 420 stores member IDs, contents IDs/point information/product IDs and price classifications/product IDs and coupon classifications, and information output times.

The purchase-history-information storing unit 430 is a storing unit that stores purchase information received from the POS server 300 as purchase history information. The purchase-history-information storing unit 430 stores, as purchase history information, member IDs, product IDs, and purchase times that are transmitted from the POS server 300 via the communication control unit 480.

The customer-information transmitting/receiving unit 440 is a processing unit that transmits customer information to the store server 200. The customer-information transmitting/receiving unit 440 transmits the customer information stored in the whole-customer-information storing unit 410 to the store server via the communication control unit 480 at a predetermined timing, for example, before the store opening hour.

The log-information receiving unit 450 is a processing unit that receives log information from the store servers 200. The log-information receiving unit 450 stores the log information received from the store server 200 via the communication control unit 480, in the log-history-information storing unit 420.

The purchase-information receiving unit 460 is a processing unit that receives purchase information from the POS server 300. The purchase-information receiving unit 460 stores the purchase information received from the POS server 300 via the communication control unit 480, in the purchase-history-information storing unit 430.

The customer-information-analysis processing unit 470 is a processing unit that extracts purchase attributes and cart attributes from the log history information and the purchase history information and stores them in the whole-customer-information storing unit 410 in accordance with individual users. The customer-information-analysis processing unit 470 reads the purchase history information from the purchase-history-information storing unit 430, analyzes the purchase pattern of each user in compliance with predetermined rules, classifies them into classifications that are determined in compliance with predetermined rules to define them as purchase attributes, and registers them in the whole-customer-information storing unit 410 according to member IDs.

The purchase pattern here mean a tendency relating to specific items or specific fields of items in comparison with the user's purchase conditions in the past, such as frequent purchase of low-calorie food items and frequent purchase of beer.

Then, the customer-information-analysis processing unit 470 checks whether each user frequently purchases a specific item, with reference to a predetermined threshold value. For instance, when low-calorze food items are frequently purchased, the purchase attribute is set to "01", while when beer is frequently purchased, the purchase attribute is set to "03". These are registered into the whole-customer-information storing unit 410 in accordance with member IDs.

Further, the customer-information-analysis processing unit 470 reads log history information from the log-history-information storing unit 420 and purchase history information from the purchase-history-information storing unit 430, compares them for each member ID to analyze the user's behavioral pattern, classifies them into classifications that are determined in compliance with predetermined rules to define them as cart attributes, and registers them into the whole-customer-information storing unit 410 in accordance with member IDs.

The behavioral pattern here mean a tendency as to how the various types of information output on the cart terminal 100 are related to the user's purchase conditions thereafter, such as frequent purchase of a product on special sale after outputting "special sale information" on the cart terminal 100, and frequent purchase of food items included in a recipe after outputting the "recipe information" on the cart terminal 100.

Then, the customer-information-analysis processing unit 470 checks how often each user purchases a product related to the information output on the cart terminal 100, with reference to a predetermined threshold value. For instance, when a product on special sale is frequently purchased after the "special sales information" is output on the cart terminal 100, the cart attribute is set to "11". When a food item included in a recipe is frequently purchased after the "recipe information" is output on the cart terminal 100, the cart attribute is set to "14". They are registered into the whole-customer-information storing unit 410 for each member ID.

The communication control unit 480 is a processing unit that controls communications with the store server 200 and with the POS server 300, each of which is connected thereto via the internet 30.

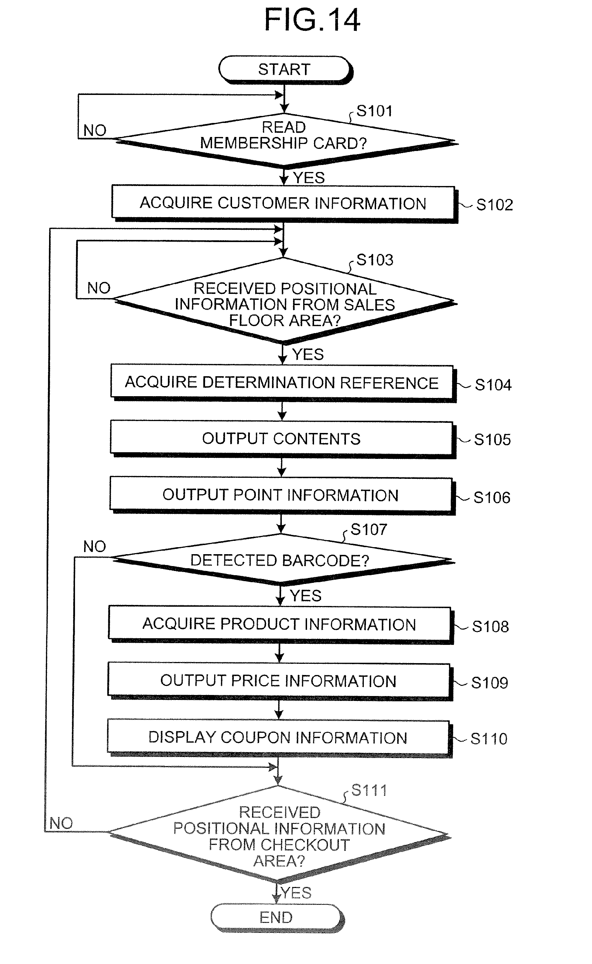

Fig. 14 is a flowchart for explaining the processing procedure of the cart terminal 100 according to the present embodiment. As shown in the drawing, the cart terminal 100 starts operating when a user places his/her membership card into the card reader 101 for reading (Step S101). First, the output control unit 116 controls the customer-information acquiring unit 114 so that the customer information of the user is acquired from the customer-information storing unit 210 of the store server 200, based on the member ID acquired by the member-ID acquiring unit 110 (Step S102) .

For instance, if the customer-information storing unit 210 is configured in the same manner as the example described in Fig. 10, when the member ID acquired by the member-ID acquiring unit 110 is "90001", the customer information of the user is "gold" for the membership ranking, "in their thirties" for the age group, "female" for the gender, "01" for the purchase attribute, and "11" for the cart attribute.

Then, when the positional-information acquiring unit 111 receives positional information transmitted by an IR transmitter installed in the sales floor area (Step S103, Yes), the output control unit 116 acquires the determination reference from the determination-reference-information storing unit 105 based on the positional information (Step S104).

For instance, if the determination-reference-information storing unit 105 is configured in the same manner as the example described in Fig. 4, when the position number included in the positional information received by the positional-information acquiring unit 111 is "001", the determination reference of the price information is determined as "membership ranking", the determination reference of the point information is determined as "cart attribute", the determination reference of the contents information is determined as "purchase attribute", and the determination reference of the coupon information is determined as "age group".

Thereafter, the output control unit 116 outputs the contents information stored in the contents-information storing unit 106 on the display 104, based on the positional information, the determination reference, and the customer information (Step S105). The output control unit 116 further outputs the point information stored in the point-information storing unit 107 on the display 104, also based on the positional information, the determination reference, and the customer information (Step S106).

For instance, if the contents-information storing unit 106 is configured in the same manner as the example described in Fig. 5, when the position number is "001", the determination reference of the contents information is "purchase attribute", and the customer attribute of "purchase attribute" is "01 (frequent purchase of low-calorie food items)", the contents information "low-calorie information" is output on the display 104 as the contents information.

In addition, for instance, if the point-information storing unit 107 is configured in the same manner as the example described in Fig. . 6, when the position number is "001", the determination reference of the point information is "cart attribute", and the customer attribute is "11 (purchase of related products when outputting point information)", the point information "+20 (points)" is output on the display 104 as the point information.

Then, when the product-ID acquiring unit 112 acquires a product ID by the user placing the barcode attached to a product into the barcode reader 103 for reading, the output control unit 116 acquires the product information from the product-information storing unit 220 of the store server 200 based on the product ID and outputs the product information on the display 104 based on the positional information, the determination reference, the customer information, the product information, and the price classification stored in the price-information storing unit 108 (Step S109). Further, the coupon information is output on the display 104 based on the positional information, the determination reference, the customer information, the product information, and the coupon classification stored in the coupon-information storing unit 109 (Step S110).

For instance, if the product-information storing unit 220 is configured in the same manner as the example described in Fig. 11 and the price-information storing unit 108 is configured in the same manner as the example described in Fig. 7, when the product ID acquired by the product-ID acquiring unit 112 is "veg01", the determination reference of the price information is "membership ranking", and the customer attribute is "gold", the price classification is set to "price 3", causing "100 (yen)" for "price 3" corresponding to the product ID "veg01" to be output as the price information on the display 104.

In addition, for instance, if the coupon-information storing unit 109 is configured in the same manner as the example described in Fig. 8 and the price-information storing unit 108 is configured in the same manner as the example described in Fig. 7, when the product ID acquired by the product-ID acquiring unit 112 is "veg01", the determination reference of the coupon information is "age group", and the customer attribute of the "age group" is "in their thirties", the coupon classification is set to "coupon 1", causing "salad coupon (coupon valid for purchase of salad ingredients) for the "coupon 1" corresponding to the product ID "veg01" to be output as the coupon information on the display 104.

Then, the output control unit 116 repeats the above processes of Steps S103 through S110 until the positional-information acquiring unit 111 acquires positional information transmitted from the IR transmitter installed in the checkout area (Step S111, Yes).

As described above, the cart terminal 100 is configured so that: the positional-information acquiring unit 111 detects the positional information that indicates the position in the store by controlling the IR receiver 102; the customer-information acquiring unit 114 acquires customer information that indicates each user's behavioral attribute obtained by comparing product-related information output for the user in the past and purchase information that indicates products purchased by the user in the past; the contents-information storing unit 106, the point-information storing unit 107, the price-information storing unit 108, and the coupon-information storing unit 109 store product-related information in association with the positional information and the behavioral attributes; and the output control unit 116 acquires and outputs product-related information appropriate for the user from the contents-information storing unit 106, the point-information storing unit 107, the price-information storing unit 108, the coupon-information storing unit 109, and the stored product-related information, based on the positional information detected by the positional-information acquiring unit 111 and the behavioral attributes included in the customer information. Hence, information can be output based on the behavioral attribute that indicates the user's purchase behavior in response to the output product-related information. As a result, timely product-related information that is likely to induce users to take a purchase behavior can be provided.

According to the present embodiment, the POS server 300 is configured so that: a the purchase-information storing unit 310 stores purchase information for each user that indicates products purchased by users in the past; the customer-information-analysis processing unit 470 in the information analysis server 400 extracts behavioral attributes that indicate users' purchase behaviors in response to product-related information by comparing the log information which is generated by storing the product-related information output for the user by the cart terminal 100 in the past and the purchase information stored by the POS server 300; the IR receiver 102 in the cart terminal 100 detects positional information that indicates the position in the store 10; the contents-information storing unit 106, the point-information storing unit 107, the price-information storing unit 108, and the coupon-information storing unit 109 store product-related information in association with the positional information and the detected behavioral attributes; and product-related information is acquired and output from the product-related information stored in the contents-information storing unit 106, the point-information storing unit 107, the price-information storing unit 108, and the coupon-information storing unit 109, based on the detected positional information and behavioral attributes extracted by the information analysis server 400. Hence, information can be output based on the behavioral attribute that indicates the user's purchase behavior in response to the output product-related information. As a result, timely product-related information that is likely to induce users to take a purchase behavior can be provided.

In addition, the cart terminal 100 includes a card reader 101 that detects a member ID that uniquely identifies a user; the customer-information storing unit 210 acquires the user's behavioral attributes based on the member ID; the customer-information acquiring unit 114 acquires a behavioral attribute based on the member ID detected by the card reader 101; and the output control unit 116 acquires and outputs product-related information from the contents-information storing unit 106, the point-information storing unit 107, the price-information storing unit 108, and the coupon-information storing unit 109, based on the positional information and the behavioral attribute acquired by the customer-information acquiring unit 114. Thus, product-related information appropriate for each user can be output by uniquely identifying users by use of membership cards such as magnetic cards.

Furthermore, the cart terminal 100 includes a barcode reader that detects a product ID that uniquely identifies a product in the store; the product-information storing unit 220 stores product information in correspondence with the product ID; the product-information acquiring unit 115 acquires product information based on the product ID detected by the barcode reader 103; and the output control unit 116 acquires and outputs product-related information from the contents-information storing unit 106, the point-information storing unit 107, the price-information storing unit 108, and the coupon-information storing unit 109, based on the positional information and the product information acquired by the product-information acquiring unit 115. Thus, product-related information for each product can be output by attaching barcodes or the like to products in the store to uniquely identify the products.

Although the cart terminal has been explained in the present embodiment, a cart terminal program with the same function can be achieved by realizing the structure of the cart terminal on a software program.

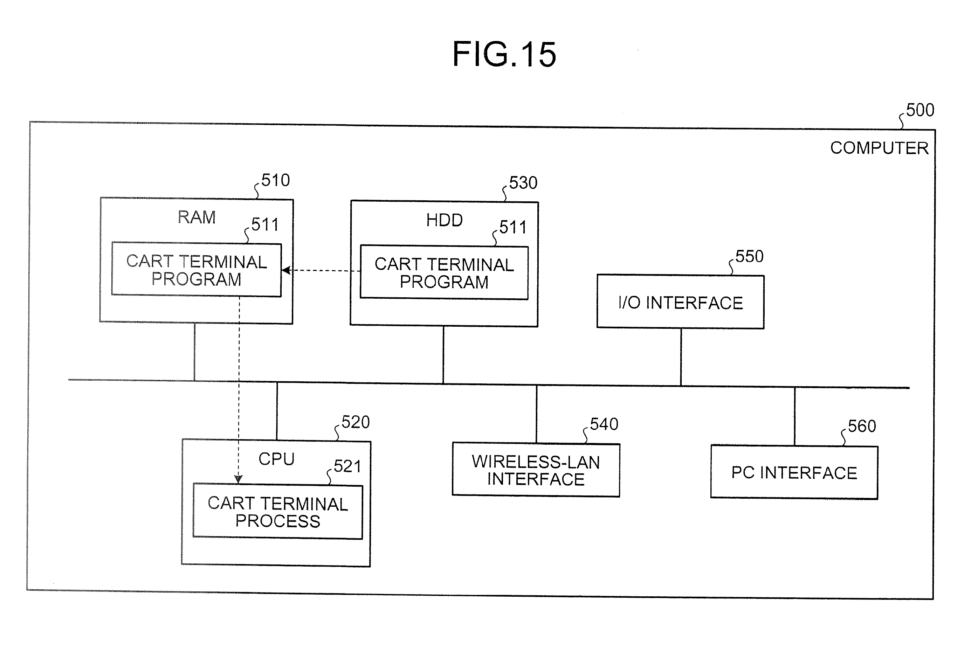

Fig. 15 is a functional block diagram of the structure of a computer 500 that executes the cart terminal program according to the present embodiment. The computer 500 includes a random access memory (RAM) 510, a central processing unit (CPU) 520, a hard disk drive (HDD) 530, a wireless-LAN interface 540, an input/output (I/O) interface 550, and a PC interface 560.

The RAM 510 is a memory that stores programs and the result of the programs being executed, while the CPU 520 is a central processing device that reads out and executes a program from the RAM 510.

The HDD 530 is a disk device that stores programs and data, while the wireless-LAN interface 540 is an interface for connecting the computer 500 to other computers by way of the wireless LAN.

The I/O 550 is an interface for connecting inputting devices and display devices such as touch panels, while the PC interface 560 is an interface for connecting the computer 500 to other computers.

Then, a cart terminal program 511 executed on the computer 500 is stored in the databases of other computers connected thereto by way of the PC interface 560 or the wireless-LAN interface 540, read out from the databases, and installed in the computer 500.

Then, the installed cart terminal program 511 is stored in the HDD 530, read out to the RAM 510, and executed as a cart terminal process 521.

Further, although a case in which a cart terminal installed on a cart that is used in a store is introduced has been explained in the present embodiment, the present invention should not be limited thereto. The present invention can equally be applied to a portable information terminal apparatus such as a PDA. In other words, the present invention can be applied in a similar manner as long as an information terminal that can move with the user is used.

In addition, although a case in which the shopping cart system is constituted with the store server 200, the POS server 300, and the information analysis server 400 has been explained in the present embodiment, the functional units included in each server may be distributed or unified. For instance, if the store 10 is located at the same place as the management division 20, a shopping cart system may be configured with a server that has the functional units included in the store server 200 and the functional units included in the information analysis server.

Moreover, although a case in which an IR transmitter and an IR receiver are used as means for acquiring positional information in the present embodiment, an IC tag (such as an RFID) and an IC tag reader, for instance, may be used.

Furthermore, although a case in which a barcode attached to a product and a barcode reader are used as means for identifying products has been explained in the present embodiment, an IC tag (such as an RFID) and an IC tag reader, for instance, may be used.

Still further, although a case in which the information outputting region is divided into two has been explained in the present embodiment, the information outputting region may be divided into regions more than two, or, for instance, a single information outputting region may be switched on a periodical basis at predetermined intervals, or may be switched by the operation of the user.

According to an embodiment of the present invention, the information output system is configured to detect positional information that shows a position in a store; stores a user's behavioral attribute for each user that is acquired by comparing product-related information output for the user in the past with purchase information that indicates the products purchased by the user in the past; stores product-related information in correspondence with the positional information and the behavioral attribute; and acquires and outputs product-related information that is appropriate for the user, from the stored product-related information, based on the detected positional information and the stored behavioral attribute. Thus, information can be output based on the behavioral attribute that indicates the user's purchase behavior in response to the output product-related information. As a result, the present invention has an effect of providing the user with timely information related to products that is likely to arouse the user's purchase behavior.

Furthermore, according to an embodiment of the present invention, the information terminal apparatus is configured to detect user identification information that uniquely identifies users; stores behavioral attributes in association with the user identification information; acquires a user's behavioral attribute from the stored behavioral attributes, based on the detected user identification information; and acquires and outputs product-related information that is appropriate for the user, from the stored product-related information, based on the positional information and the obtained behavioral attribute. Thus, the invention has an effect that the product-related information that is appropriate for each individual user can be output by uniquely identifying a user with, for instance, a membership card such as a magnetic card.

Moreover, according to an embodiment of the present invention, the information terminal apparatus is configured to detect product identification information that uniquely identifies products in a store; stores product-related information in association with the product identification information; acquires and outputs product-related information that is appropriate for a user from the stored product-related information, based on the positional information, the behavioral attribute, and the detected product identification information. Thus, the invention has an effect that product-related information can be output in correspondence to each product by providing products in the store with, for example, barcodes to identify the products.

Furthermore, according to an embodiment of the present invention, the information terminal apparatus is configured to store product advertisement information as product-related information. Thus, the invention has an effect that timely information that contributes to users' purchase, such as advertisement information, can be output for users who tend to purchase, in response to the advertisement information that is appropriate for the users, products related thereto.

Moreover, according to an embodiment of the present invention, the information terminal apparatus is configured to store product price information as product-related information. Thus, the invention has an effect that timely price information can be output for users who tend to purchase related products in response to the price information that is appropriate for individual users.

Furthermore, according to an embodiment of the present invention, the information terminal apparatus is configured to store product point information as product-related information. Thus, the invention has an effect that timely point information can be output for users who tend to purchase related products in response to the point information that is appropriate for individual users.

Moreover, according to an embodiment of the present invention, the information terminal apparatus is configured to store product coupon information as product-related information. Thus, the invention has an effect that timely coupon information can be output for users who tend to purchase related products in response to the coupon information that is appropriate for individual users.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An information terminal apparatus that moves around a store with a user, the information terminal apparatus comprising:
a positional-information detecting unit that detects positional information indicating a position in the store;
a customer-attribute-information storing unit that stores a behavioral attribute of the user obtained by collating product-related information previously output for the user and purchase information indicating a product previously purchased by the user;
a product-related-information storing unit that stores the product-related information in association with the positional information and the behavioral attribute; and
an information-output control unit that acquires the product-related information for the user from the stored product-related information, based on the detected positional information and the stored behavioral attribute, and outputs the acquired product-related information.

2. The information terminal apparatus according to claim 1, further comprising:
a user-identification-information detecting unit that detects user identification information for uniquely identifying the user, wherein
the customer-attribute-information storing unit stores the behavioral attribute in association with the user identification information, and
the information-output control unit acquires the behavioral attribute of the user from the stored behavioral attribute based on the detected user identification information, acquires the product-related information for the user from the stored product-related information based on the detected positional information and the acquired behavioral attribute, and outputs the acquired product-related information.

3. The information terminal apparatus according to claim 1, further comprising:
a product-identification-information detecting unit that detects product identification information for uniquely identifying the product in the store, wherein
the product-related-information storing unit stores the product-related information in association with the product identification information, and
the information-output control unit acquires product-related information for the user from the stored product-related information based on the detected positional information, the stored behavioral attribute, and the detected product identification information, and outputs the acquired product-related information.

4. The information terminal apparatus according to claim 1, wherein
the product-related-information storing unit stores product advertisement information as the product-related information.

5. The information terminal apparatus according to claim 1, wherein the product-related-information storing unit stores product price information as the product-related information.

6. The information terminal apparatus according to claim 1, wherein
the product-related-information storing unit stores product point information as the product-related information.

7. The information terminal apparatus according to claim 1, wherein
the product-related-information storing unit stores product coupon information as the product-related information.

8. The information terminal apparatus according to claim 6, wherein
the product point information is accumulated in response to an instruction of the user.

9. The information terminal apparatus according to claim 7, wherein
the product coupon information is accumulated in response to an instruction of the user.

10. A method of controlling an information terminal apparatus that moves around a store with a user, the method comprising:
detecting positional information indicating a position in the store;
storing a behavioral attribute of the user obtained by collating product-related information previously output for the user and purchase information indicating a product previously purchased by the user;
storing stores the product-related information in association with the positional information and the behavioral attribute; and
information-output controlling including
acquiring the product-related information for the user from the stored product-related information, based on the detected positional information and the stored behavioral attribute; and
outputting the acquired product-related information.

11. A computer-readable recording medium that stores a computer program for controlling an information terminal apparatus that moves around a store with a user, wherein
the computer program causes a computer to execute:
detecting positional information indicating a position in the store;
storing a behavioral attribute of the user obtained by collating product-related information previously output for the user and purchase information indicating a product previously purchased by the user;
storing stores the product-related information in association with the positional information and the behavioral attribute; and
information-output controlling including
acquiring the product-related information for the user from the stored product-related information, based on the detected positional information and the stored behavioral attribute: and
outputting the acquired product-related information.
